(19) Europäisches Patentamt
European Patent Office
Office européen des brevets

(11) **EP 4 708 117 A1**

(12) **EUROPEAN PATENT APPLICATION**
published in accordance with Art. 153(4) EPC

(43) Date of publication:
**11.03.2026 Bulletin 2026/11**

(21) Application number: **24814043.6**

(22) Date of filing: **24.04.2024**

(51) International Patent Classification (IPC):
**G06F 40/18** (2020.01)    **G06F 17/16** (2006.01)

(52) Cooperative Patent Classification (CPC):
**G06F 9/30; G06F 17/16; G06F 40/18**

(86) International application number:
**PCT/CN2024/089650**

(87) International publication number:
**WO 2024/244837 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023  CN 202310644474
16.08.2023  CN 202311036871**

(71) Applicant: **Huawei Technologies Co., Ltd.
Shenzhen, Guangdong 518129 (CN)**

(72) Inventors:
• **WANG, Xinliang**
  **Shenzhen, Guangdong 518129 (CN)**
• **CHEN, Qiang**
  **Shenzhen, Guangdong 518129 (CN)**
• **DING, Zhaohui**
  **Shenzhen, Guangdong 518129 (CN)**
• **WANG, Zijun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MATRIX OPERATION METHOD, PROCESSOR AND COMPUTING DEVICE**

(57)    Embodiments disclosed in this application relate to the field of computing technologies, and in particular, to a matrix operation method, a processor, and a computing device. The matrix operation method is performed by a processor including a matrix register. In the matrix operation method, data of a first matrix to be transposed may be stored in the matrix register, where the first matrix includes N rows and M columns, and the matrix register stores the data of the first matrix in a two-dimensional form of N rows and M columns. Then, the data of the first matrix may be read from the matrix register in a row-by-row or column-by-column manner, to obtain data of a second matrix obtained by transposing the data of the first matrix, where the second matrix includes M rows and N columns. According to this application, matrix transpose can be completed by using a matrix register, so that efficiency of transposing a matrix can be improved.

A processor stores data of a first matrix in a matrix register, where the first matrix includes N rows and M columns, and the matrix register stores the data of the first matrix in a two-dimensional form of N rows and M columns    ⟩ 401

Read the data of the first matrix from the matrix register in a row-by-row or column-by-column manner, to obtain data of a second matrix obtained by transposing the data of the first matrix, where the second matrix includes M rows and N columns    ⟩ 402

**FIG. 4**

## Description

This application claims priorities to Chinese Patent Application No. 202310644474.9, filed on May 31, 2023 and entitled "COMPUTING DEVICE", and to Chinese Patent Application No. 202311036871.4, filed on August 16, 2023 and entitled "MATRIX OPERATION METHOD, PROCESSOR, AND COMPUTING DEVICE", both of which are incorporated herein by reference in their entireties.

## TECHNICAL FIELD

This application relates to the field of computing technologies, and in particular, to a matrix operation method, a processor, and a computing device.

## BACKGROUND

A matrix operation is an operation frequently used in a high-performance computing (High-Performance Computing, HPC) application, and includes matrix transpose, addition, subtraction, multiplication, and the like.

Currently, when a matrix in the HPC application needs to be transposed, a processor may transpose the matrix by using a scalar register or a vector register, resulting in low efficiency.

## SUMMARY

Embodiments of this application provide a matrix operation method, a processor, and a computing device, so that matrix transpose can be completed by using a matrix register, improving efficiency of transposing a matrix. Corresponding technical solutions are as follows:

According to a first aspect, a matrix operation method is provided and is performed by a processor including a matrix register. The matrix operation method includes:

storing, by the processor, data of a first matrix in the matrix register, where the first matrix includes N rows and M columns, and the matrix register stores the data of the first matrix in a two-dimensional form of N rows and M columns; and then reading, by the processor, the data of the first matrix from the matrix register in a row-by-row or column-by-column manner, to obtain data of a second matrix that is obtained by transposing the data of the first matrix and that includes M rows and N columns, where M and N are positive integers, and values of M and N may be equal or unequal.

The matrix register is a register that can store data of a matrix in a two-dimensional form. The processor may provide a read instruction, to read, by column or by row, data of a matrix stored in the matrix register. The processor may further provide a store instruction, to store vector data (for example, a column in data of a matrix) in the matrix register in a form of a row or column. When the processor reads or stores the data from or in the matrix register in the form of the row or column, a corresponding read performance difference and a corresponding storage performance difference may be ignored.

In the solution shown in this application, for the data of the first matrix corresponding to the first matrix to be transposed, the processor may store the data of the first matrix in the matrix register. When each row of data stored in the matrix register is each row of data of the first matrix, the processor may read, in the column-by-column manner, the data of the first matrix stored in the matrix register, to obtain the data of the second matrix of the second matrix obtained by transposing the first matrix. When each row of data stored in the matrix register is each column of data of the first matrix, the processor may read, in the row-by-row manner, the data of the first matrix stored in the matrix register, to obtain the data of the second matrix of the second matrix obtained by transposing the first matrix.

It can be learned that, in the solution shown in this application, the matrix can be transposed provided that the data of the matrix to be transposed is stored in the matrix register and then the data of the matrix stored in the matrix register is read in a changed read manner. In this way, for a matrix with N rows and M columns, only N store instructions and M read instructions (or M store instructions and N read instructions) are required to implement a transpose operation on the matrix, so that a quantity of instructions required for transposing the matrix can be reduced, and efficiency of transposing the matrix is improved.

In an implementation, the storing data of a first matrix in the matrix register includes: storing the data of the first matrix stored in a memory in the matrix register in a row-by-row or column-by-column manner.

In the solution shown in this application, the data of the first matrix may be stored in the memory in an array manner. The processor may read a row of data or a column of data of the first matrix from the memory each time depending on different storage manners. For a row of data that may be read from the memory each time, the processor may store the row of data in the matrix register in a row or column manner. In other words, a row of data of the first matrix read by the processor each time may be stored in the matrix register by row, or may be stored in the matrix register by column. For a column of data that may be read from the memory each time, the processor may store the column of data in the matrix register in a row or column manner. In other words, a column of data of the first matrix read each time may be stored in the matrix register by row, or may be stored in the matrix register by column.

After storing, in the row-by-row manner, the row of data or the column of data of the first matrix read each time in the matrix register, the processor may read, in the column-by-column manner, the data of the first matrix stored in the matrix register, to obtain the data of the second matrix obtained through transposing. After storing, in the column-by-column manner, the row of data or the column of data of the first matrix read each time in the matrix register, the processor may read, in the row-by-row manner, the data of the first matrix stored in the matrix register, to obtain the data of the second matrix obtained through transposing. It can be learned that, in the solution shown in this application, the matrix can be transposed by the processor provided that the data of the matrix to be transposed is stored in the matrix register and then the data of the matrix stored in the matrix register is read in a changed read manner, so that a quantity of instructions required for transposing the matrix can be reduced, and efficiency of transposing the matrix can be improved.

In an implementation, the processor further includes a vector register. Correspondingly, the storing data of a first matrix in the matrix register includes: storing the data of the first matrix in the vector register in a form of vector data; and storing, in the matrix register in a row or column manner, vector data that corresponds to the data of the first matrix and that is stored in the vector register.

In the solution shown in this application, the processor further includes the vector register, and the processor may store the data of the matrix in the matrix register via the vector register. For a row of data or a column of data of the first matrix read from a memory each time, the processor may first store the row of data or the column of data of the first matrix in the vector register in a form of a vector, and then read the row of data or the column of data of the first matrix stored in the vector register into the matrix register, so as to store the data of the first matrix in the matrix register. In this way, the memory stores the data of the matrix in the matrix register via the vector register, so that a quantity of data paths established between the memory and the matrix register can be reduced, and hardware costs of the processor can be reduced.

In an implementation, the reading the data of the first matrix from the matrix register in a row-by-row or column-by-column manner, to obtain data of a second matrix obtained by transposing the data of the first matrix includes: reading the data of the first matrix from the matrix register in the row-by-row or column-by-column manner, and storing vector data read each time in the vector register; and reading the vector data stored in the vector register to a memory, to obtain the data of the second matrix obtained by transposing the data of the first matrix.

In the solution shown in this application, the processor may store the data of the matrix in the matrix register via the vector register, or may read the data of the matrix from the matrix register via the vector register. For a row of data or a column of data read from the matrix register each time, the processor may first store the row of data or the column of data in the vector register in a form of a vector, and then read the row of data or the column of data stored in the vector register into the memory, so as to read the data of the first matrix from the matrix register in the row-by-row or column-by-column manner. In this way, the memory stores the data of the matrix in the matrix register via the vector register, and reads the data of the matrix from the matrix register via the vector register, so that establishment of a data path between the memory and the matrix register can be avoided, and hardware costs of the processor can be further reduced.

In an implementation, the processor further includes a vector register. Correspondingly, the reading the data of the first matrix from the matrix register in a row-by-row or column-by-column manner, to obtain data of a second matrix obtained by transposing the data of the first matrix includes: reading the data of the first matrix from the matrix register in the row-by-row or column-by-column manner, and storing vector data read each time in the vector register; and reading the vector data stored in the vector register to a memory, to obtain the data of the second matrix obtained by transposing the data of the first matrix.

In the solution shown in this application, the processor further includes the vector register, and the processor may read the data of the matrix stored in the matrix register into the memory via the vector register. A row of data or a column of data read from the matrix register each time may be first stored in the vector register in a form of a vector, and then the row of data or the column of data stored in the vector register is read into the memory, so as to read the data of the first matrix from the matrix register in the row-by-row or column-by-column manner. In this way, the memory reads the data of the matrix from the matrix register via the vector register, so that a quantity of data paths established between the memory and the matrix register can be reduced, and hardware costs of the processor can be reduced.

In an implementation, the processor further includes a computation unit. Correspondingly, after the data of the second matrix obtained by transposing the data of the first matrix is obtained, the method further includes: inputting the data of the second matrix to the computation unit, to cause the computation unit to perform a specified computation on the second data matrix.

In the solution shown in this application, the processor further includes the computation unit like a matrix computation unit or a vector computation unit. After the data of the second matrix obtained through transposing is read from the data of the matrix stored in the matrix register, the read data of the second matrix may be directly input to the computation unit for a subsequent computation, and does not need to be stored in the memory, thereby improving matrix operation efficiency.

According to a second aspect, a processor is provided. The processor includes a matrix register. The processor is configured to: store data of a first matrix in the matrix register, where the first matrix includes N rows and M columns, and the matrix register stores the data of the first matrix in a two-dimensional form of N rows and M columns; and read the data of the first matrix from the matrix register in a row-by-row or column-by-column manner, to obtain data of a second matrix obtained by transposing the data of the first matrix, where the second matrix includes M rows and N columns.

In an implementation, the processor is configured to store the data of the first matrix stored in a memory in the matrix register in a row-by-row or column-by-column manner.

In an implementation, the processor further includes a vector register. The processor is configured to: store the data of the first matrix in the vector register in a form of vector data; and store, in the matrix register in a row or column manner, vector data that corresponds to the data of the first matrix and that is stored in the vector register.

In an implementation, the processor is configured to: read the data of the first matrix from the matrix register in the row-by-row or column-by-column manner, and store vector data read each time in the vector register; and read the vector data stored in the vector register to a memory, to obtain the data of the second matrix obtained by transposing the data of the first matrix.

In an implementation, the processor further includes a vector register. The processor is configured to: read the data of the first matrix from the matrix register in the row-by-row or column-by-column manner, and store vector data read each time in the vector register; and read the vector data stored in the vector register to a memory, to obtain the data of the second matrix obtained by transposing the data of the first matrix.

In an implementation, the processor further includes a computation unit. The processor is further configured to input the data of the second matrix to the computation unit, to cause the computation unit to perform a specified computation on the second data matrix.

According to a third aspect, a computing device is provided. The computing device includes a memory and a processor. The processor is configured to execute instructions stored in the memory, so that the processor performs the matrix operation method according to the first aspect.

According to a fourth aspect, a computer program product including instructions is provided. When the instructions are run by the computing device according to the third aspect, the computing device is enabled to perform the matrix operation method according to the first aspect.

According to a fifth aspect, a computer-readable storage medium is provided, including computer program instructions. When the computer program instructions are executed by the computing device according to the third aspect, the computing device may perform the matrix operation method according to the first aspect.

**BRIEF DESCRIPTION OF DRAWINGS**

FIG. 1 is a diagram of a method for implementing matrix transpose via a scalar register in a related technology;
FIG. 2 is a diagram of a method for implementing matrix transpose via a vector register in a related technology;
FIG. 3 is a diagram of a structure of a computing device according to an embodiment of this application;
FIG. 4 is a flowchart of a matrix operation method according to an embodiment of this application;
FIG. 5 is a diagram of matrix transpose according to an embodiment of this application;
FIG. 6 is a diagram of a structure of a computing device according to an embodiment of this application;
FIG. 7 is a diagram of matrix transpose according to an embodiment of this application;
FIG. 8 is a diagram of a structure of a computing device according to an embodiment of this application;
FIG. 9 is a diagram of matrix transpose according to an embodiment of this application; and
FIG. 10 is a diagram of a structure of a computing device according to an embodiment of this application.

**DESCRIPTION OF EMBODIMENTS**

To make the objectives, technical solutions, and advantages of this application clearer, the following further describes implementations of this application in detail with reference to the accompanying drawings.

A matrix operation is an operation commonly applied to computers, especially to the high-performance computing (High-Performance Computing, HPC) field and the artificial intelligence (Artificial Intelligence) field. The matrix operation includes transpose, addition, subtraction, multiplication, and the like. In a related technology, a matrix operation is generally implemented via a scalar processor or a vector memory.

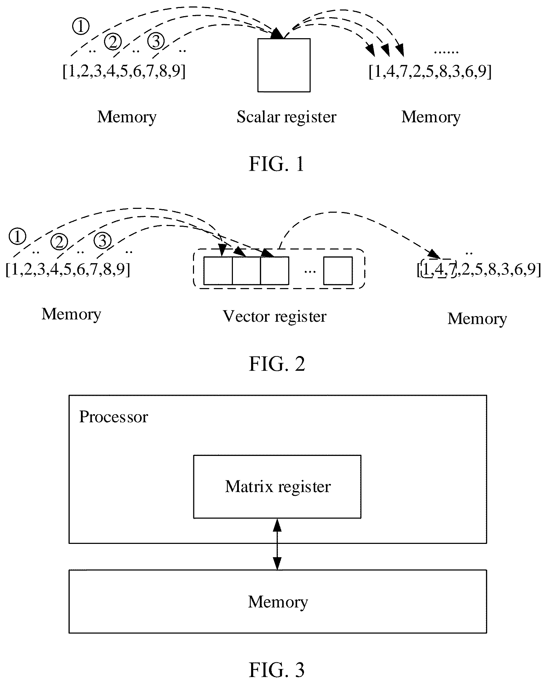

FIG. 1 is a diagram of a method for implementing matrix transpose via a scalar register in a related technology. In an internal memory like a memory or a cache, a matrix may be stored in an array manner. For example, a matrix A is $\begin{bmatrix} 1 & 2 & 3 \\ 4 & 5 & 6 \\ 7 & 8 & 9 \end{bmatrix}$. If the matrix A is stored in the memory by row, a matrix actually stored in the memory is [1,2,3,4,5,6,7,8,9]. If the matrix A is stored in the memory by column, a matrix actually stored in the memory is [1,4,7,2,5,8,3,6,9]. As shown in FIG. 1, in an example, if the matrix A is transposed via the scalar register, and the matrix is stored in the memory by row, that is, the matrix A stored in the memory is [1,2,3,4,5,6,7,8,9], the elements "1", "4", "7", "2", "5", "8", "3", "6", and "9" of the matrix A stored in the memory may be sequentially read. Each time an element is read, the read element may be stored in the scalar register, and then the element stored in the scalar register is stored back into the memory. In this way, the elements "1", "4", "7", "2", "5", "8", "3", "6", and "9" may be sequentially stored in the memory, to obtain a matrix B obtained by transposing the matrix A. The matrix B is stored in the memory by row, that is, the matrix B is [1,4,7,2,5,8,3,6,9], that is, the matrix B is $\begin{bmatrix} 1 & 4 & 7 \\ 2 & 5 & 8 \\ 3 & 6 & 9 \end{bmatrix}$ . If the matrix A is transposed in this way, nine scalar load (load) instructions are required to sequentially store the elements of the matrix A in the memory in the scalar register, and nine scalar store (store) instructions are further required to sequentially store the elements in the scalar register back into the memory. Similarly, if an n×n matrix is transposed via a scalar register, $n^2$ scalar load instructions and $n^2$ scalar store instructions are required.

FIG. 2 is a diagram of a method for implementing matrix transpose via a vector register in a related technology. As shown in FIG. 2, in an example, if a matrix A is transposed via the vector register, and the matrix is stored in a memory by row, that is, the matrix A stored in the memory is [1,2,3,4,5,6,7,8,9], elements in columns " 1,4,7", "2,5,8", and "3,6,9" of the matrix A stored in the memory may be sequentially read. A column of elements read each time may be stored in the vector register, and then the elements stored in the vector register are stored back into the memory. In this way, elements "1,4,7", "2,5,8", and "3,6,9" may be sequentially stored in the memory, to obtain a matrix B obtained by transposing the matrix A. The matrix B is stored in the memory by row, that is, the matrix B [1,4,7,2,5,8,3,6,9], that is, the matrix B

is $\begin{bmatrix} 1 & 4 & 7 \\ 2 & 5 & 8 \\ 3 & 6 & 9 \end{bmatrix}$ . If the matrix A is transposed in this way, three gather load (gather load) instructions are required to sequentially store the elements in the columns of the matrix A in the memory in the vector register, and three vector store (store) instructions are further required to sequentially store the elements in the vector register back into the memory. However, because the matrix A is stored in the memory by row, that is, elements in the columns of the matrix A are not continuously stored in the memory, gather load is actually split into three scalar load instructions, to obtain elements in a column of the matrix A. Therefore, when the vector register is used, nine scalar load instructions and three vector store instructions are actually required. Similarly, if an n×n matrix is transposed via a vector register, $n^2$ scalar load (load) instructions and n vector store instructions are required.

An embodiment of this application provides a matrix operation method. In the method, matrix transpose can be completed by using a matrix register in a processor, so that a quantity of instructions required for transposing the matrix can be reduced, and efficiency of transposing the matrix can be improved. The matrix register is a register that can store data of a matrix in a two-dimensional form in which rows and columns are distinguished. The processor may provide a corresponding read instruction, to read, by column, data of a matrix stored in the matrix register. The processor further provides a corresponding store instruction, to store each column of data in the data of the matrix in the matrix register in a form of a row or column, or store each row of data in the data of the matrix in the matrix register by column in a form of a row or column. When the processor reads or stores the data of the matrix from or in the matrix register in the form of the row or column, a corresponding read performance difference and a corresponding storage performance may be ignored. In an example, the matrix register may be a matrix register corresponding to a scalable matrix unit (Scalable Matrix Unit, SME).

FIG. 3 is a diagram of a structure of a computing device according to an embodiment of this application. The computing device includes at least a memory and a processor. The memory may be an external memory (for example, a hard disk), or may be a memory storage (for example, a memory or a cache). The processor includes at least a matrix register, and the processor may further include a vector register, a scalar register, and the like (not shown in FIG. 3). If the processor includes only the matrix register, the matrix register and the memory may access each other. For example, data stored in a memory or a cache may be directly written into the matrix register, and data stored in the matrix register may be directly written into the memory or the cache. The processor may be any one or more of processors such as a central processing unit (central processing unit, CPU), a graphics processing unit (graphics processing unit, GPU), a microprocessor (microprocessor, MP), or a digital signal processor (digital signal processor, DSP).

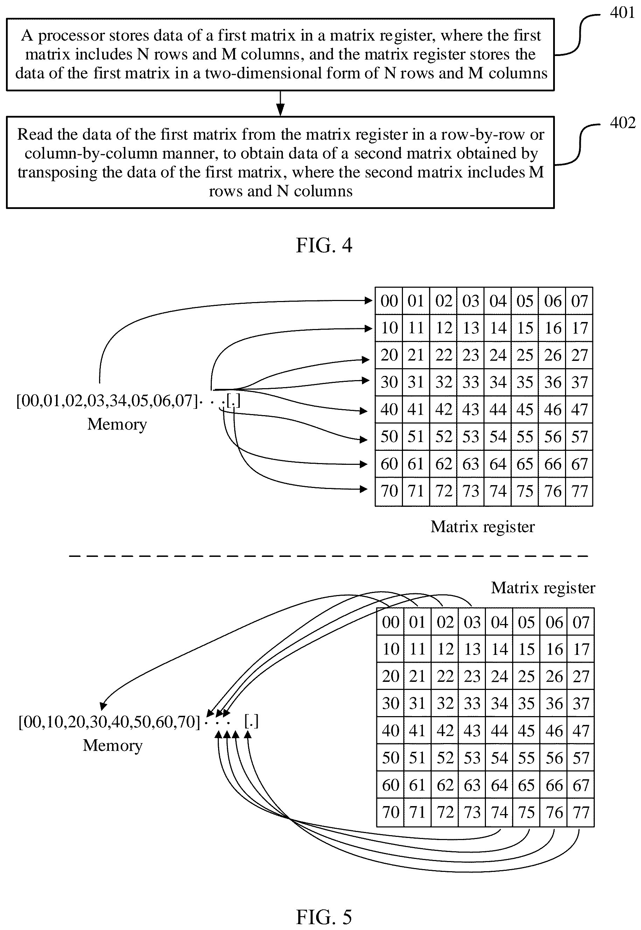

FIG. 4 is a flowchart of a matrix operation method according to an embodiment of this application. The method may be performed by the processor of the computing device in FIG. 3, to complete matrix transpose by using the matrix register, reduce a quantity of instructions required for transposing a matrix, and improve efficiency of transposing the matrix. Refer to FIG. 4. The method includes the following steps.

Step 401: The processor stores data of a first matrix in the matrix register, where the first matrix includes N rows and M columns, and the matrix register stores the data of the first matrix in a two-dimensional form of N rows and M columns.

During implementation, an application related to a matrix operation may run in the computing device, for example, an HPC application or an application related to artificial intelligence. In a running process of the application in a computer device, when a matrix needs to be transposed, the application may send a matrix transpose request to the processor, so that the processor performs transposing on the corresponding matrix. According to the matrix operation method provided in this embodiment of this application, a function for implementing matrix transpose may be formed according to an assembly/intrinsic/high-level programming language, and is used as a dynamic/static/high-level programming language acceleration library for the matrix operation. When the processor needs to perform matrix transpose, the processor may call, from a function library, the function for implementing matrix transpose, and execute the function for implementing matrix transpose, to implement the matrix operation method provided in this embodiment of this application, for example, implement processing in steps 401 and 402.

In this embodiment of this application, a matrix to be transposed may be referred to as the first matrix, and matrix data corresponding to the first matrix may be referred to as the data of the first matrix. Before being transposed, the data of the first matrix may be stored in the external memory or the internal memory. The first matrix may include the N rows and the M columns, where both M and N are positive integers, and values of M and N may be equal or unequal. In this application, an example in which the data of the first matrix is stored in the memory and the data of the first matrix is a two-dimensional matrix is used to describe the matrix operation method in detail. Other cases are similar, and details are not described again.

The data of the first matrix may be stored in the memory by row or by column. When the data of the first matrix is stored in the memory by row, the processor may read the target matrix from the memory by row, and store, in the matrix register by row or by column, a row of elements read each time. When the target matrix is stored in the memory by column, the processor may read the target matrix from the memory by column, and store, in the matrix register by row or by column, a column of elements read each time.

As shown in FIG. 5, the first matrix is a matrix including eight rows and eight columns. Correspondingly, the data of the first matrix may be stored in the memory by row as [00,01,02,03,04,05,06,07,10,11,12, ..., 75,76,77]. The processor may read a row of data, for example, [00,01,02,03,04,05,06,07] or [10,11,12,13,14,15,16,17] in the data of the first matrix from the memory each time, and may store, in the matrix register in a form of a row, the row of data that is in the data of the first matrix and that is read each time.

In an example, the first matrix may alternatively be one of matrices obtained by dividing a large-sized matrix to be transposed. When data of any first matrix is read, reading may be performed from stored matrix data corresponding to the large-sized matrix. A specific reading process belongs to a conventional technology, and details are not described in this application. Correspondingly, after all first matrices are transposed, a matrix obtained by transposing the large-size matrix may be formed by all second matrices obtained through transposing.

Step 402: Read the data of the first matrix from the matrix register in a row-by-row or column-by-column manner, to obtain data of a second matrix obtained by transposing the data of the first matrix, where the second matrix includes M rows and N columns.

After the data of the first matrix is stored in the matrix register, the data of the first matrix may be read from the matrix register in the row-by-row or column-by-column manner. If a row of data or a column of data that is in the data of the first matrix and that is read each time is stored in the matrix register in a row manner, the data of the first matrix may be sequentially read from the matrix register in the column-by-column manner, so as to complete row-column conversion of the data of the first matrix. If a row of data or a column of data that is in the data of the first matrix and that is read each time is stored in the matrix register in a column manner, the data of the first matrix may be sequentially read from the matrix register in the row-by-row manner, so as to complete row-column conversion of the data of the first matrix, and obtain the data of the second matrix obtained by transposing the data of the first matrix.

As shown in FIG. 5, for the data of the first matrix stored in the matrix register, the data of the first matrix may be read in the column-by-column manner, that is, [00,10,20,30,40,50,60,70], [01,11,21,31,41,51,61,71], ..., and [07,17,27,37,47,57,67,77] are sequentially read, to obtain the data of the second matrix obtained by transposing the data of the first matrix.

In this way, for the first matrix with the N rows and the M columns, if the corresponding data of the first matrix is stored in the memory by row, N store instructions are required to store the data of the first matrix in the matrix register, and then M read instructions are required to read the data of the first matrix from the matrix register, so as to obtain the data of the second matrix obtained through transposing. If the corresponding data of the first matrix is stored in the memory by column, M store instructions are required to store the data of the first matrix in the matrix register, and then N read instructions are required to read the data of the first matrix from the matrix register, so as to obtain the data of the second matrix obtained through transposing. It can be learned that, according to the matrix operation method provided in this application, matrix transpose can be completed through only M+N instructions, so that efficiency of transposing a matrix can be improved.

FIG. 5 is a diagram of matrix transpose according to an embodiment of this application. As shown in FIG. 5, the first matrix is an 8×8 matrix, for example, the data of the first matrix is

$$\begin{bmatrix} 00 & 01 & 02 & 03 & 04 & 05 & 06 & 07 \\ 10 & 11 & 12 & 13 & 14 & 15 & 16 & 17 \\ 20 & 21 & 22 & 23 & 24 & 25 & 26 & 27 \\ 30 & 31 & 32 & 33 & 34 & 35 & 36 & 37 \\ 40 & 41 & 42 & 43 & 44 & 45 & 46 & 47 \\ 50 & 51 & 52 & 53 & 54 & 55 & 56 & 57 \\ 60 & 61 & 62 & 63 & 64 & 65 & 66 & 67 \\ 70 & 71 & 72 & 73 & 74 & 75 & 76 & 77 \end{bmatrix}$$ . The data of

the first matrix may be stored in the memory by row, that is, the data of the first matrix is stored in the memory as [00,01,02,03,04,05,06,07,10,11,12, ..., 75,76,77]. When the data of the first matrix is transposed, each row of elements in the data of the first matrix in the memory may be stored in the matrix register through eight store instructions. Then, each column of elements in the data of the first matrix stored in the matrix register are read through eight read instructions. For example, columns of read elements may be stored in the memory in a form of a matrix. In this way, the data of the second matrix obtained by transposing the data of the first matrix may be obtained from the memory, and the data of the second matrix is stored in the memory as [00,10,20,30,40,50,60,70,01,11,21, ..., 57,67,77]. In other words, the matrix is

$$\begin{bmatrix} 00 & 10 & 20 & 30 & 40 & 50 & 60 & 70 \\ 01 & 11 & 21 & 31 & 41 & 51 & 61 & 71 \\ 02 & 12 & 22 & 34 & 42 & 52 & 62 & 72 \\ 03 & 13 & 23 & 33 & 43 & 53 & 63 & 73 \\ 04 & 14 & 24 & 34 & 44 & 54 & 64 & 74 \\ 05 & 15 & 25 & 35 & 45 & 55 & 65 & 75 \\ 06 & 16 & 26 & 36 & 46 & 56 & 66 & 76 \\ 07 & 17 & 27 & 37 & 47 & 57 & 67 & 77 \end{bmatrix}$$ .

In an example, when the data of the first matrix is read from the matrix register in the row-by-row or column-by-column manner, data read each time may be stored in the memory, and the data of the second matrix obtained by transposing the data of the first matrix is obtained from the memory. Then, the data of the second matrix obtained through transposing in the memory is input to a computation unit in the processor for a further computation. In another example, when the data of the first matrix is read from the matrix register in the row-by-row or column-by-column manner, data read each time may be directly input to a corresponding computation unit in the processor for a further computation, to improve computation efficiency.

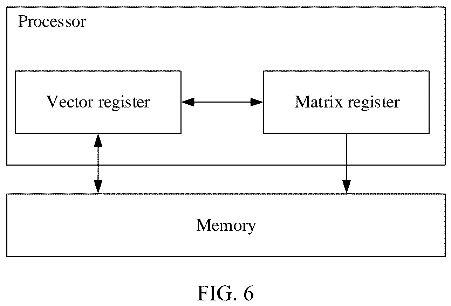

FIG. 6 is a diagram of a structure of a computing device according to an embodiment of this application. A processor of the computing device may further include a vector register. There is a bidirectional data path between the vector register and a memory to implement mutual data access, and there is a bidirectional data path between the vector register and a matrix register to implement mutual data access. There is a unidirectional data path between the matrix register and the memory, that is, data in the matrix register may be stored in the memory, and data in the memory can be stored in the matrix register only by using the vector register.

For the computing device shown in FIG. 6, processing in step 401 may be replaced with the following: The processor stores data of a first matrix in the vector register in a form of vector data, and then stores, in the matrix register in a row or column manner, vector data that corresponds to the data of the first matrix and that is stored in the vector register.

When the data of the first matrix is stored in a memory by row, the processor may read the target matrix from the memory by row, and store a row of data read each time, as a row vector corresponding to the first matrix, in a vector register. In this way, a plurality of vector memories may store row vectors corresponding to the first matrix respectively. Then, the row vectors stored in all the vector registers may be sequentially stored in the matrix register by row, or stored in the matrix register by column.

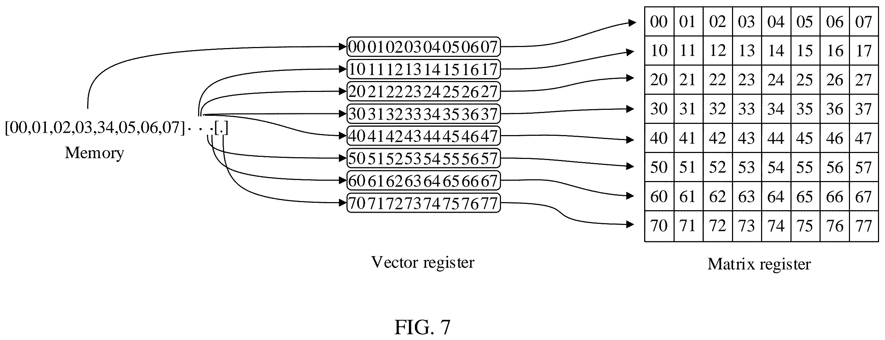

FIG. 7 is a diagram of matrix transpose according to an embodiment of this application. As shown in FIG. 7, the first matrix is an 8×8 matrix, for example, the

first matrix is $$\begin{bmatrix} 00 & 01 & 02 & 03 & 04 & 05 & 06 & 07 \\ 10 & 11 & 12 & 13 & 14 & 15 & 16 & 17 \\ 20 & 21 & 22 & 23 & 24 & 25 & 26 & 27 \\ 30 & 31 & 32 & 33 & 34 & 35 & 36 & 37 \\ 40 & 41 & 42 & 43 & 44 & 45 & 46 & 47 \\ 50 & 51 & 52 & 53 & 54 & 55 & 56 & 57 \\ 60 & 61 & 62 & 63 & 64 & 65 & 66 & 67 \\ 70 & 71 & 72 & 73 & 74 & 75 & 76 & 77 \end{bmatrix}$$ .

The data of the first matrix may be stored in the memory by row, that is, the data of the first matrix is stored in the memory as [00,01,02,03,04,05,06,07,10,11,12, ..., 75,76,77]. When the data of the first matrix is transposed, each row of elements in the target matrix in the memory may be stored in the vector register through eight vector load instructions. Then, vectors stored in the vector register are stored in the matrix register by row through eight store instructions. Finally, each column of data in the matrix stored in the matrix register may be read through eight read instructions. For example, columns of read data may be stored in the memory in a form of a matrix. In this way, data of a second matrix obtained by transposing the data of the first matrix may be obtained from the memory, and the data of the second matrix is stored in the memory as [00,10,20,30,40,50,60,70,01,11,21, ..., 57,67,77]. In other words, the second matrix is

$$\begin{bmatrix} 00 & 10 & 20 & 30 & 40 & 50 & 60 & 70 \\ 01 & 11 & 21 & 31 & 41 & 51 & 61 & 71 \\ 02 & 12 & 22 & 34 & 42 & 52 & 62 & 72 \\ 03 & 13 & 23 & 33 & 43 & 53 & 63 & 73 \\ 04 & 14 & 24 & 34 & 44 & 54 & 64 & 74 \\ 05 & 15 & 25 & 35 & 45 & 55 & 65 & 75 \\ 06 & 16 & 26 & 36 & 46 & 56 & 66 & 76 \\ 07 & 17 & 27 & 37 & 47 & 57 & 67 & 77 \end{bmatrix}.$$

In this embodiment of this application, when the memory stores data in the matrix register, the vector memory may be used. In this way, a quantity of data paths between the matrix register and the memory can be reduced, so that hardware costs of the processor can be reduced. In addition, a quantity of instructions required for transposing a matrix is not excessively increased, so that efficiency of transposing the matrix can be improved.

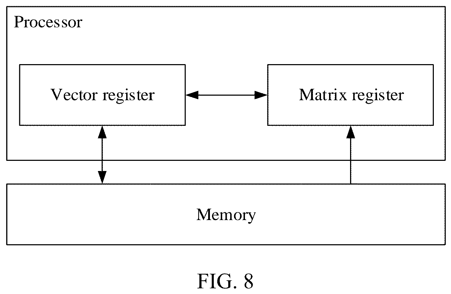

FIG. 8 is a diagram of a structure of a computing device according to an embodiment of this application. Sameness between the computing device and the computing device shown in FIG. 6 is that a processor of the computing device also includes a vector register, there is a bidirectional data path between the vector register and a memory to implement mutual data access, and there is a bidirectional data path between the vector register and a matrix register to implement mutual data access. Difference between the computing device and the computing device shown in FIG. 6 is that there is a unidirectional data path between the matrix register and the memory, that is, data in the matrix register may be stored in the memory, and data in the memory can be stored in the matrix register only by using the vector register.

For the computing device shown in FIG. 8, processing in step 402 may be replaced with the following: reading the data of the first matrix from the matrix register in a row-by-row or column-by-column manner, and storing vector data read each time in the vector register; and then reading the vector data stored in the vector register to a memory, to obtain data of a second matrix obtained by transposing the data of the first matrix.

If each row of read data or each column of read data in the data of the first matrix is stored in a matrix register unit by row, the data of the first matrix stored in the matrix register may be read column by column, and each column of data (column vector) read each time may be stored in the vector register. Then, the column vectors stored in all vector registers may be sequentially stored in the memory. If each row of read data or each column of read data in the data of the first matrix is stored in a matrix register unit by column, the data of the first matrix stored in the matrix register may be read row by row, and each row of data (row vector) read each time may be stored in the vector register. Then, column vectors stored in all vector registers may be sequentially stored in the memory.

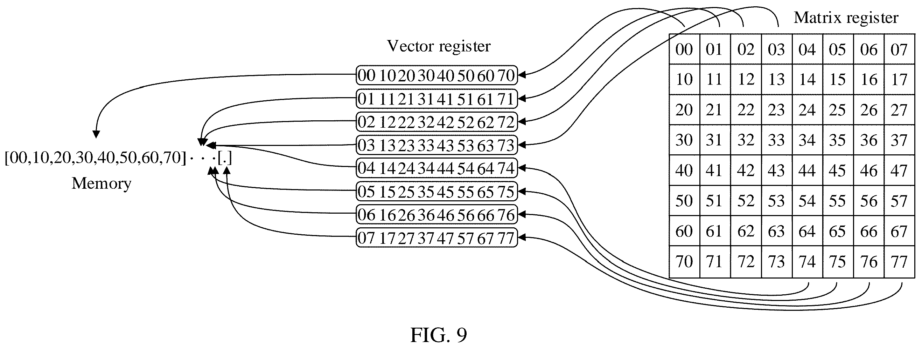

FIG. 9 is a diagram of matrix transpose according to an embodiment of this application. As shown in FIG. 9, the first matrix is an $8 \times 8$ matrix, for example, the data of the first matrix is

$$\begin{bmatrix} 00 & 01 & 02 & 03 & 04 & 05 & 06 & 07 \\ 10 & 11 & 12 & 13 & 14 & 15 & 16 & 17 \\ 20 & 21 & 22 & 23 & 24 & 25 & 26 & 27 \\ 30 & 31 & 32 & 33 & 34 & 35 & 36 & 37 \\ 40 & 41 & 42 & 43 & 44 & 45 & 46 & 47 \\ 50 & 51 & 52 & 53 & 54 & 55 & 56 & 57 \\ 60 & 61 & 62 & 63 & 64 & 65 & 66 & 67 \\ 70 & 71 & 72 & 73 & 74 & 75 & 76 & 77 \end{bmatrix}.$$ The data

of the first matrix may be stored in the memory by row, that is, the target matrix is stored in the memory as [00,01,02,03,04,05,06,07,10,11,12, ..., 75,76,77]. When the target matrix is transposed, each row of data in the data of the first matrix in the memory may be stored in the matrix register through eight store instructions. Then, the data of the first matrix stored in the matrix register is read column by column into the vector register through eight read instructions. Finally, vectors stored in the vector register are read into the memory through eight vector load instructions. In this way, the data of the second matrix obtained by transposing the data of the first matrix may be obtained from the memory, and the data of the second matrix is stored in the memory as [00,10,20,30,40,50,60,70,01,11,21, ..., 57,67,77]. In other words, the second matrix is

$$\begin{bmatrix} 00 & 10 & 20 & 30 & 40 & 50 & 60 & 70 \\ 01 & 11 & 21 & 31 & 41 & 51 & 61 & 71 \\ 02 & 12 & 22 & 34 & 42 & 52 & 62 & 72 \\ 03 & 13 & 23 & 33 & 43 & 53 & 63 & 73 \\ 04 & 14 & 24 & 34 & 44 & 54 & 64 & 74 \\ 05 & 15 & 25 & 35 & 45 & 55 & 65 & 75 \\ 06 & 16 & 26 & 36 & 46 & 56 & 66 & 76 \\ 07 & 17 & 27 & 37 & 47 & 57 & 67 & 77 \end{bmatrix}.$$

In this embodiment of this application, when the matrix register stores data in the memory, the vector memory may be used. In this way, a quantity of data paths between the matrix register and the memory can be reduced, so that hardware costs of the processor can be reduced. In addition, a quantity of instructions required for transposing a matrix is not excessively increased, so that efficiency of transposing the matrix can be improved.

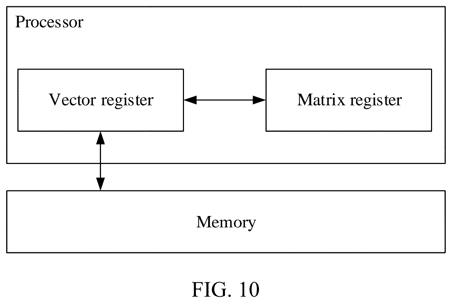

FIG. 10 is a diagram of a structure of a computing device according to an embodiment of this application. Sameness between the computing device and the computing devices shown in FIG. 6 and FIG. 8 is that a processor of the computing device also includes a vector register, the vector register and a memory may access each other, and the vector register and a matrix register may access each other. Difference between the computing device and the computing device shown in FIG. 6 is that the matrix register and the memory cannot access each other, that is, if data stored in the memory needs to be stored in the matrix register, the data in the memory may be first stored in the vector register, and then the data stored in the vector register is stored in the matrix register. Similarly, if the data stored in the memory needs to be stored in the matrix register, the data in the memory may be first stored in the vector register, and then the data stored in the vector register is stored in the matrix register.

For the computing device shown in FIG. 10, processing in step 401 may be replaced with the following: The processor stores data of a first matrix in the vector register in a form of vector data, and then stores, in the matrix register in a row or column manner, vector data that corresponds to the data of the first matrix and that is stored in the vector register. Further processing is the same as content of the embodiment corresponding to FIG. 6, and details are not described herein again.

Processing in step 402 may be replaced with the following: reading the data of the first matrix from the matrix register in a row-by-row or column-by-column manner, and storing vector data read each time in the vector register; and then reading the vector data stored in the vector register to a memory, to obtain data of a second matrix obtained by transposing the data of the first matrix. Further processing may be the same as content of the embodiment corresponding to FIG. 6, and details are not described herein again.

In this embodiment of this application, when data is stored between the matrix register and the memory, the vector memory may be used. In this way, establishment of a data path between the matrix register and the memory can be avoided, so that hardware costs of the processor can be reduced. In addition, a quantity of instructions required for transposing a matrix is not excessively increased, so that efficiency of transposing the matrix can be improved.

An embodiment of this application further provides a processor. The processor includes a matrix register, and may further include a vector register. For example, the processor may be the processor shown in FIG. 3, FIG. 6, FIG. 8, or FIG. 10. The processor may be configured to:

store data of a first matrix in the matrix register, where the first matrix includes N rows and M columns, and the matrix register stores the data of the first matrix in a two-dimensional form of N rows and M columns; and read the data of the first matrix from the matrix register in a row-by-row or column-by-column manner, to obtain data of a second matrix obtained by transposing the data of the first matrix, where the second matrix includes M rows and N columns.

In an implementation, the processor is configured to store the data of the first matrix stored in a memory in the matrix register in a row-by-row or column-by-column manner.

In an implementation, the processor further includes the vector register. The processor is configured to: store the data of the first matrix in the vector register in a form of vector data; and store, in the matrix register in a row or column manner, vector data that corresponds to the data of the first matrix and that is stored in the vector register.

In an implementation, the processor is configured to: read the data of the first matrix from the matrix register in the row-by-row or column-by-column manner, and store vector data read each time in the vector register; and read the vector data stored in the vector register to a memory, to obtain the data of the second matrix obtained by transposing the data of the first matrix.

In an implementation, the processor further includes the vector register. The processor is configured to: read the data of the first matrix from the matrix register in the row-by-row or column-by-column manner, and store vector data read each time in the vector register; and read the vector data stored in the vector register to a memory, to obtain the data of the second matrix obtained by transposing the data of the first matrix.

In an implementation, the processor further includes a computation unit. The processor is further configured to input the data of the second matrix to the computation unit, to cause the computation unit to perform a specified computation on the second data matrix.

The processor provided in this embodiment of this application may perform the matrix operation method described in the foregoing embodiment, to implement matrix transpose. For a specific implementation, refer to content of the foregoing embodiment. Details are not described herein again. The processor provided in this embodiment of this application implements matrix transpose by using the matrix register, so that a quantity of instructions required for transposing a matrix can be reduced, and efficiency of transposing the matrix can be improved.

An embodiment of this application further provides a computer program product including instructions. The computer program product may be a software or program product that includes instructions and that can run on a computing device or be stored in any usable medium. When the computer program product runs on the computing device provided in the foregoing embodiment, the computing device is enabled to perform the matrix operation method provided in the foregoing embodiment.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the matrix operation method provided in the foregoing embodiment.

In this application, terms such as "first" and "second" are used to distinguish between same items or similar items that have basically same effects and functions. It should be understood that there is no logical or time sequence dependency between "first" and "second", and a quantity and an execution sequence are not limited. It should be further understood that, although the following descriptions use terms such as "first" and "second" to describe various elements, these elements should not be limited by the terms. These terms are simply used to distinguish one element from another. A term "at least one" in this application means one or more, and a term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

**Claims**

1. A matrix operation method, performed by a processor, wherein the processor comprises a matrix register, and the method comprises:

   storing data of a first matrix in the matrix register, wherein the first matrix comprises N rows and M columns, and the matrix register stores the data of the first matrix in a two-dimensional form of N rows and M columns; and
   reading the data of the first matrix from the matrix register in a row-by-row or column-by-column manner, to obtain data of a second matrix obtained by transposing the data of the first matrix, wherein the second matrix comprises M rows and N columns.

2. The method according to claim 1, wherein the storing data of a first matrix in the matrix register comprises:
   storing the data of the first matrix stored in a memory in the matrix register in a row-by-row or column-by-column manner.

3. The method according to claim 1, wherein the processor further comprises a vector register; and the storing data of a first matrix in the matrix register comprises:

   storing the data of the first matrix in the vector register in a form of vector data; and
   storing, in the matrix register in a row or column manner, vector data that corresponds to the data of the first matrix and that is stored in the vector register.

4. The method according to claim 3, wherein the reading the data of the first matrix from the matrix register in a row-by-row or column-by-column manner, to obtain data of a second matrix obtained by transposing the data of the first matrix comprises:

   reading the data of the first matrix from the matrix register in the row-by-row or column-by-column manner, and storing vector data read each time in the vector register; and
   reading the vector data stored in the vector register to a memory, to obtain the data of the second matrix obtained by transposing the data of the first matrix.

5. The method according to claim 1, wherein the processor further comprises a vector register; and the reading the data of the first matrix from the matrix register in a row-by-row or column-by-column manner, to obtain data of a second matrix obtained by transposing the data of the first matrix comprises:

   reading the data of the first matrix from the matrix register in the row-by-row or column-by-column manner, and storing vector data read each time in the vector register; and
   reading the vector data stored in the vector register to a memory, to obtain the data of the second matrix obtained by transposing the data of the first matrix.

6. The method according to any one of claims 1 to 5, wherein the processor further comprises a computation unit, and after the obtaining the data of the second matrix obtained by transposing the data of the first matrix, the method further comprises:
   inputting the data of the second matrix to the computation unit, to cause the computation unit to perform a specified computation on the second data matrix.

7. A processor, wherein the processor comprises a matrix register, and the processor is configured to:

   store data of a first matrix in the matrix register, wherein the first matrix comprises N rows and M columns, and the matrix register stores the data of the first matrix in a two-dimensional form of N rows and M columns; and
   read the data of the first matrix from the matrix register in a row-by-row or column-by-column manner, to obtain data of a second matrix obtained by transposing the data of the first matrix, wherein the second matrix comprises M rows and N columns.

8. The processor according to claim 7, wherein the processor is configured to:
store the data of the first matrix stored in a memory in the matrix register in a row-by-row or column-by-column manner.

9. The processor according to claim 7, wherein the processor further comprises a vector register, and the processor is configured to:

store the data of the first matrix in the vector register in a form of vector data; and
store, in the matrix register in a row or column manner, vector data that corresponds to the data of the first matrix and that is stored in the vector register.

10. The processor according to claim 9, wherein the processor is configured to:

read the data of the first matrix from the matrix register in the row-by-row or column-by-column manner, and store vector data read each time in the vector register; and
read the vector data stored in the vector register to a memory, to obtain the data of the second matrix obtained by transposing the data of the first matrix.

11. The processor according to claim 7, wherein the processor further comprises a vector register, and the processor is configured to:

read the data of the first matrix from the matrix register in the row-by-row or column-by-column manner, and store vector data read each time in the vector register; and
read the vector data stored in the vector register to a memory, to obtain the data of the second matrix obtained by transposing the data of the first matrix.

12. The processor according to any one of claims 7 to 11, wherein the processor further comprises a computation unit, and the processor is further configured to:
input the data of the second matrix to the computation unit, to cause the computation unit to perform a specified computation on the second data matrix.

13. A computing device, wherein the computing device comprises a memory and a processor, the processor comprises a matrix register, and the processor is configured to execute instructions stored in the memory, so that the processor performs the method according to any one of claims 1 to 6.

① ② ③
[1,2,3,4,5,6,7,8,9]          [1,4,7,2,5,8,3,6,9]

Memory          Scalar register          Memory

FIG. 1

① ② ③
[1,2,3,4,5,6,7,8,9]          [1,4,7,2,5,8,3,6,9]

Memory          Vector register          Memory

FIG. 2

Processor

Matrix register

Memory

FIG. 3

A processor stores data of a first matrix in a matrix register, where the first matrix includes N rows and M columns, and the matrix register stores the data of the first matrix in a two-dimensional form of N rows and M columns

401

Read the data of the first matrix from the matrix register in a row-by-row or column-by-column manner, to obtain data of a second matrix obtained by transposing the data of the first matrix, where the second matrix includes M rows and N columns

402

FIG. 4

| 00 | 01 | 02 | 03 | 04 | 05 | 06 | 07 |
| 10 | 11 | 12 | 13 | 14 | 15 | 16 | 17 |
| 20 | 21 | 22 | 23 | 24 | 25 | 26 | 27 |
| 30 | 31 | 32 | 33 | 34 | 35 | 36 | 37 |
| 40 | 41 | 42 | 43 | 44 | 45 | 46 | 47 |
| 50 | 51 | 52 | 53 | 54 | 55 | 56 | 57 |
| 60 | 61 | 62 | 63 | 64 | 65 | 66 | 67 |
| 70 | 71 | 72 | 73 | 74 | 75 | 76 | 77 |

[00,01,02,03,34,05,06,07]· · .[.]
Memory

Matrix register

Matrix register

| 00 | 01 | 02 | 03 | 04 | 05 | 06 | 07 |
| 10 | 11 | 12 | 13 | 14 | 15 | 16 | 17 |
| 20 | 21 | 22 | 23 | 24 | 25 | 26 | 27 |
| 30 | 31 | 32 | 33 | 34 | 35 | 36 | 37 |
| 40 | 41 | 42 | 43 | 44 | 45 | 46 | 47 |
| 50 | 51 | 52 | 53 | 54 | 55 | 56 | 57 |
| 60 | 61 | 62 | 63 | 64 | 65 | 66 | 67 |
| 70 | 71 | 72 | 73 | 74 | 75 | 76 | 77 |

[00,10,20,30,40,50,60,70]· · · [.]
Memory

FIG. 5

FIG. 6

FIG. 7

Processor

| Vector register | ⟷ | Matrix register |

Memory

FIG. 8

Matrix register

| 00 | 01 | 02 | 03 | 04 | 05 | 06 | 07 |
|----|----|----|----|----|----|----|----|
| 10 | 11 | 12 | 13 | 14 | 15 | 16 | 17 |
| 20 | 21 | 22 | 23 | 24 | 25 | 26 | 27 |
| 30 | 31 | 32 | 33 | 34 | 35 | 36 | 37 |
| 40 | 41 | 42 | 43 | 44 | 45 | 46 | 47 |
| 50 | 51 | 52 | 53 | 54 | 55 | 56 | 57 |
| 60 | 61 | 62 | 63 | 64 | 65 | 66 | 67 |
| 70 | 71 | 72 | 73 | 74 | 75 | 76 | 77 |

Vector register

00 10 20 30 40 50 60 70
01 11 21 31 41 51 61 71
02 12 22 32 42 52 62 72
03 13 23 33 43 53 63 73
04 14 24 34 44 54 64 74
05 15 25 35 45 55 65 75
06 16 26 36 46 56 66 76
07 17 27 37 47 57 67 77

[00,10,20,30,40,50,60,70] · · ·[.]

Memory

FIG. 9

FIG. 10

## INTERNATIONAL SEARCH REPORT

| International application No. |
| --- |
| **PCT/CN2024/089650** |

| A. | CLASSIFICATION OF SUBJECT MATTER |
| --- | --- |

G06F40/18(2020.01)i;  G06F17/16(2006.01)i

According to International Patent Classification (IPC) or to both national classification and IPC

| B. | FIELDS SEARCHED |
| --- | --- |

Minimum documentation searched (classification system followed by classification symbols)

  IPC:  G06F

Documentation searched other than minimum documentation to the extent that such documents are included in the fields searched

Electronic data base consulted during the international search (name of data base and, where practicable, search terms used)

  CNABS; CNTXT; CNKI; VEN; USTXT; WOTXT; EPTXT; IEEE: 矩阵, 寄存器, 行, 列, 读取, 存储, 向量, matrix, register, row, column, read, memory, vector

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109522125 A (ZHENGZHOU YUNHAI INFORMATION TECHNOLOGY CO., LTD.) 26 March 2019 (2019-03-26)<br>description, paragraphs [0002]-[0171] | 1-13 |
| A | CN 101093474 A (BEIJING T3G TECHNOLOGY CO., LTD.) 26 December 2007 (2007-12-26)<br>entire document | 1-13 |
| A | CN 102253925 A (SINOXTECH (JIANGSU) CO., LTD.) 23 November 2011 (2011-11-23)<br>entire document | 1-13 |
| A | CN 104679690 A (NATIONAL UNIVERSITY OF DEFENSE TECHNOLOGY OF PLA) 03 June 2015 (2015-06-03)<br>entire document | 1-13 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 May 2024** | **09 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/089650**

| Patent document cited in search report | | | Publication date (day/month/year) | Patent family member(s) | | | Publication date (day/month/year) |
|---|---|---|---|---|---|---|---|
| CN | 109522125 | A | 26 March 2019 | CN | 109522125 | B | 03 December 2021 |
| CN | 101093474 | A | 26 December 2007 | CN | 101093474 | B | 07 April 2010 |
| CN | 102253925 | A | 23 November 2011 | None | | | |
| CN | 104679690 | A | 03 June 2015 | None | | | |

Form PCT/ISA/210 (patent family annex) (July 2022)

**REFERENCES CITED IN THE DESCRIPTION**

**Patent documents cited in the description**

- CN 202310644474
- CN 202311036871